# EUROPÄISCHE PATENTANMELDUNG

(11) **EP 2 400 141 A1**
(43) Veröffentlichungstag der Anmeldung: **28.12.2011**
(21) Anmeldenummer: 11170729.5
(22) Anmeldetag: 21.06.2011
(51) Int. Cl.: F02M 35/10, B01D 39/20, B01D 53/02, B01J 20/18

(54) **Werkstoff zur Kohlenwasserstoffadsorption**

(30) Priorität: 23.06.2010 DE 202010009413 U
(71) Anmelder: MAHLE International GmbH, 70376 Stuttgart (DE)
(72) Erfinder: Enderich, Andreas, 73734 Esslingen (DE); Sauter, Hartmut, 71272 Renningen (DE)
(74) Vertreter: BRP Renaud & Partner

(57) **Zusammenfassung**

Die vorliegende Erfindung betrifft einen Werkstoff zur Kohlenwasserstoffadsorption, insbesondere in einem Ansaugtrakt eines Kraftfahrzeuges. Erfindungswesentlich ist dabei, dass der Werkstoff ein Trägermaterial aus Metallschaum oder metallischem Vlies und eine Beschichtung aus Zeolithe aufweist.

## Beschreibung

Die vorliegende Erfindung betrifft einen Werkstoff zur Kohlenwasserstoffadsorption, insbesondere in einem Ansaugtrakt eines Kraftfahrzeuges, gemäß dem Oberbegriff des Anspruchs 1. Die Erfindung betrifft außerdem einen Ansaugtrakt, in welchem ein derartiger Werkstoff zur Kohlenwasserstoffadsorption vorgesehen ist.

Immer strenger werdende Umweltschutzauflagen erfordern es zunehmend, die Gesamtbilanz an ausgestoßenen Kohlenwasserstoffen in einem Kraftfahrzeug zu bewerten bzw. zu begrenzen. Kohlenwasserstoffe sind üblicherweise Bestandteile von Diesel- und Ottokraftstoffen und verbleiben auch nach der Verbrennung in einem Verbrennungsmotor im Abgas desselben. Zusammen mit Stickoxid und Sonneneinstrahlung können sich diese Stoffe in schleimhautreizende organische Verbindungen umwandeln und dadurch maßgeblich das Entstehen des sogenannten Sommersmogs fördern. Aus diesen Gründen gibt es bereits in vielen Teilen der Welt Obergrenzen, welche den Ausstoß von flüchtigen Kohlenwasserstoffen begrenzen. Generell wird dabei bei Kraftfahrzeugen zwischen sogenannten "Fuel-Emission" und "Non-Fuel-Emission" unterschieden, wobei erstere ihre Herkunft aus dem Kraftstoff bzw. aus der Kraftstoffanlage haben, während letztgenannte nicht aus dem Kraftstoff bzw. aus einer Kraftstoffanlage stammen. Um eine Gesamtbilanz der Kohlenwasserstoffemissionen dabei nachhaltig reduzieren zu können, sind die Kohlenwasserstoffemissionen aus beiden Quellen zu berücksichtigen.

Die vorliegende Erfindung beschäftigt sich mit dem Problem, die Gesamtemission an ausgestoßenen Kohlenwasserstoffen bei Kraftfahrzeugen zu reduzieren. Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, einen aus mehreren einzelnen Komponenten bestehenden Werkstoff zur Kohlenwasserstoffadsorption bereitzustellen, welcher insbesondere in einem Kraftfahrzeug eingesetzt werden kann und welcher ein Trägermaterial aus Metallschaum oder metallischem Vlies sowie eine Beschichtung aus Zeolith aufweist. Durch das Trägermaterial aus Metallschaum bzw. metallischem Vlies kann die mechanische Belastbarkeit, insbesondere gegenüber einem Vergleichswerkstoff aus Aktivkohle, deutlich verbessert werden, so dass der erfindungsgemäße Werkstoff deutlich höheren mechanischen Belastungen auch über längere Zeit problemlos widersteht. Zeolithe sind dabei kristalline Alumosilikate, die in zahlreichen Modifikationen in der Natur vorkommen, aber auch synthetisch hergestellt werden können. Generell weisen derartige Zeolithe ein hohes Adsorptionsvermögen für Kohlenwasserstoffe auf und können dadurch optimal für Filterprozesse zum Herausfiltern von Kohlenwasserstoffen, beispielsweise aus einer Ansaugluft für einen Verbrennungsmotor, eingesetzt werden. Darüber hinaus sind Zeolithe als natürliche Silikatminerale in großer Anzahl vorhanden und dadurch kostengünstig in einen industriellen Herstellungsprozess des erfindungsgemäßen Werkstoffes zur Kohlenwasserstoffadsorption zu integrieren. Die als Trägermaterialien verwendeten metallischen Schäume bzw. metallischen Vliese, weisen eine hohe Porosität und dadurch eine geringe Dichte auf. Trotzdem besitzen sie eine nicht zu unterschätzende mechanische Steifigkeit und können dadurch bis zu gewissen Grenzen mechanische Belastungen problemlos ertragen. Als Ausgangsmaterialien für derartige metallische Schäume bzw. metallische Vliese, können insbesondere Aluminium, und unter Verwendung geeigneter Treibmittel auch Kupfer, Zink oder Stahl/Eisen verwendet werden. Die Herstellung von Metallschäumen geschieht dabei häufig mittels Metallpulver und einem Metallhydrid, zum Beispiel Titandihydrid, wobei beide Pulver miteinander vermischt und danach, beispielsweise durch Heißpressen oder Strangpressen, zu einem Vormaterial verdichtet werden. Dieses Vormaterial wird dann auf eine Temperatur oberhalb des Schmelzpunktes des Metalls erhitzt, wodurch das Titandihydrid gasförmigen Wasserstoff freisetzt und das Gemenge aufschäumt. Selbstverständlich gibt es dabei auch weitere alternative Herstellungsverfahren. Mit dem erfindungsgemäßen Werkstoff ist es somit möglich, eine hohe Kohlenwasserstoffadsorption zu erreichen und gleichzeitig einen Werkstoff zu schaffen, der durch ein geeignetes Fertigungsverfahren, beispielsweise das Schäumen, eine nahezu beliebige Formgebung erlaubt. Trotz dieser relativ flexiblen Formgebung, besitzt der Werkstoff aufgrund der Steifigkeit seines Trägermaterials die Fähigkeit, mechanische Belastungen deutlich besser aufnehmen zu können, als dies beispielsweise von einer Aktivkohle bewältigt werden kann.

Bei einer vorteilhaften Weiterbildung der erfindungsgemäßen Lösung, ist in einem Ansaugtrakt eines Verbrennungsmotors ein Werkstoff mit einem Trägermaterial aus Metallschaum oder metallischem Vlies und einer Beschichtung aus Zeolith als Kohlenwasserstoffadsorber vorgesehen. Hierdurch kann verhindert werden, dass nach einem Abstellen des Verbrennungsmotors noch nicht verbrannte Kohlenwasserstoffe durch den Ansaugtrakt in die Umgebung gelangen und dadurch die Kohlenwasserstoffemissionsbilanz des Kraftfahrzeuges verschlechtern. Insbesondere können derartige Werkstoffe nicht nur im Bereich des Ansaugtraktes, sondern beispielsweise auch im Bereich einer Tankentlüftungsleitung, einer Kurbelgehäuseentlüftungsleitung oder einer Abgasrückführung angeordnet werden.

Bei einer vorteilhaften Weiterbildung der erfindungsgemäßen Lösung, ist der Werkstoff in einer Senke eines Luftansaugkanals des Ansaugtraktes angeordnet. Da Kohlenwasserstoffe üblicherweise schwerer sind als Luft, durchkriechen sie beim unerwünschten Austreten aus dem Luftansaugkanal normalerweise auch derartige Senken, so dass die Anordnung des erfindungsgemäßen, kohlenwasserstoffadsorbierenden Werkstoffes in einer derartigen Senke eine besonders effiziente Möglichkeit darstellt, die Kohlenwasserstoffemission zu senken.

Generell hat der erfindungsgemäße Werkstoff zur Kohlenwasserstoffadsorption und insbesondere dessen Trägermaterial aus Metallschaum bzw. metallischem Vlies den großen Vorteil, dass dessen Eigenschaften nahezu frei wählbar sind, wobei insbesondere eine Porosität des Metallschaums bzw. des metallischen Vlieses individuell an jeweilige Anforderungen anpassbar ist. Darüber hinaus ist das erfindungsgemäße Trägermaterial problemlos mechanisch bearbeitbar und bietet eine große Oberfläche, welche mit dem Zeolith beschichtet werden kann. Selbstverständlich kann dabei auch durch eine nahezu frei wählbare Zeolith-Schichtdicke Einfluss auf ein späteres Adsorptionsvermögen des Werkstoffes genommen werden.

## Patentansprüche

1. Werkstoff zur Kohlenwasserstoffadsorption, insbesondere in einem Ansaugtrakt eines Kraftfahrzeuges,
**dadurch gekennzeichnet,**
**dass** der Werkstoff ein Trägermaterial aus Metallschaum oder metallischem Vlies und eine Beschichtung aus Zeolithe aufweist.

2. Ansaugtrakt eines Verbrennungsmotors,
**dadurch gekennzeichnet,**
**dass** in dem Ansaugtrakt ein Werkstoff mit einem Trägermaterial aus Metallschaum oder metallischem Vlies und einer Beschichtung aus Zeolithe als Kohlenwasserstoffadsorber vorgesehen ist.

3. Ansaugtrakt nach Anspruch 2,
**dadurch gekennzeichnet,**
**dass** der Werkstoff auf einer Reinseite eines Luftfilters, das heißt zwischen diesem und einer Brennkammer des Verbrennungsmotors angeordnet ist.

4. Ansaugtrakt nach Anspruch 2 oder 3,
**dadurch gekennzeichnet,**
**dass** der Werkstoff in einer Senke eines Luftansaugkanals des Ansaugtraktes angeordnet ist.
